Europäisches Patentamt

European Patent Office

Office européen des brevets

(19)

(11) Veröffentlichungsnummer: **0 256 225**
A2

(12) # EUROPÄISCHE PATENTANMELDUNG

(21) Anmeldenummer: **87107246.8**

(22) Anmeldetag: **19.05.87**

(51) Int. Cl.³: **A 01 B 49/06**
A 01 B 49/02, A 01 C 7/00

(30) Priorität: **30.05.86 DE 3618200**

(43) Veröffentlichungstag der Anmeldung:
**24.02.88 Patentblatt 88/8**

(84) Benannte Vertragsstaaten:
**AT DE FR GB NL**

(71) Anmelder: **Amazonen-Werke H. Dreyer GmbH & Co. KG**
**Am Amazonenwerk 9-13**
**D-4507 Hasbergen-Gaste(DE)**

(72) Erfinder: **Gattermann, Bernd**
**Eichenwall 3**
**D-2872 Hude I.O.(DE)**

(72) Erfinder: **Steenken, Berhard**
**Waldhöfe 17**
**D-4475 Sögel 2(DE)**

(54) Sämaschine.

(57) Sämaschine mit einem Rahmen, Vorratsbehälter, Säscharen und einem Fahrwerk, welches als unter dem Vorratsbehälter und vor den Säscharen angeordnete durchgehende Bodenwalze ausgebildet ist. Um mit einfachsten Mitteln eine universell einsetzbare Sämaschine zu schaffen, ist vorgesehen, daß die Sämaschine (1) wahlweise hinter einem zapfwellenangetriebenen Bodenbearbeitungsgerät oder mittels eines Zwischenrahmens (26) unmittelbar an dem Dreipunktkraftheber eines Schleppers anzuordnen ist.

EP 0 256 225 A2

./...

FIG.1

Amazonen-Werke
H. Dreyer GmbH & Co. KG
Am Amazonenwerk 9 - 13
4507 Hasbergen-Gaste
ANR 1 000 667

Sämaschine

Die Erfindung betrifft eine Sämaschine gemäß des Oberbegriffes des Patentanspruches 1.

Eine derartige Sämaschine ist bereits durch die DE-OS 20 01 062 bekannt. Diese Sämaschine weist einen Rahmen, einen Vorratsbehälter sowie Säschare auf. Das Fahrwerk dieser Sämaschine ist also unter dem Vorratsbehälter und vor den Säscharen angeordnet und als durchgehende Bodenwalze ausgebildet. Von dieser Bodenwalze aus werden die Dosierorgane der Sämaschine angetrieben. Auf der Vorderseite weist der Rahmen dieser Sämaschine Dreipunktkupplungselemente auf, mittels derer die Sämaschine an den Dreipunktkraftheber eines Schleppers angekuppelt werden kann. Es ist bei dieser Sämaschine nicht vorgesehen, sie in Kombination mit einem zapfwellengetriebenen Bodenbearbeitungsgerät einzusetzen. Hierdurch ist es nicht möglich, diese Sämaschine in Kombination mit zapfwellengetriebenen Bodenbearbeitungsgeräten einzusetzen, um so in einem Arbeitsgang das grobschollige Saatbett zu bereiten und gleichzeitig das Saatgut in den Boden einzubringen. Diese bekannte Sämaschine kann ausschließlich nur im Soloeinsatz hinter einem Ackerschlepper eingesetzt werden.

Der Erfindung liegt nun die Aufgabe zugrunde, mit einfachsten Mitteln eine universell einsetzbare Sämaschine zu schaffen.

Diese Aufgabe wird erfindungsgemäß durch das Kennzeichen des Anspruches 1 gelöst. Infolge dieser Maßnahmen ergibt sich einerseits eine äußerst kompakte Bodenbearbeitungs- und Säkombination, wenn die Sämaschine hinter einem zapfwellengetriebenen Bodenbearbeitungsgerät eingesetzt wird oder aber die Sämaschine läßt sich mit einfachsten Mitteln unmittelbar an den Dreipunktkraftheber eines Schleppers über den erfindungsgemäßen Zwischenrahmen ankuppeln. Hierdurch ergibt sich der große Vorteil, daß die Sämaschine äußerst dicht hinter dem zapfwellengetriebenen Bodenbearbeitungsgerät angeordnet ist, so daß die Bodenwalze sich unmittelbar und sehr dicht hinter den Bodenbearbeitungswerkzeugen des zapfwellenangetrieben Bodenbearbeitungsgerätes befindet, so daß der Schwerpunkt der Sämaschine, wenn sie hinter dem Bodenbearbeitungsgerät angekuppelt ist, sich in der nächstmöglichen Position hinter dem Bodenbearbeitungsgerät befindet, so daß sich eine äußerst kompakte Bodenbearbeitungs- und Säkombination ergibt.

Durch die deutsche Offenlegungsschrift 31 05 641 ist eine Sämaschine bekannt geworden, die einerseits hinter einem zapfwellengetriebenen Bodenbearbeitungsgerät mit Nachlaufwalze als Kombinationssämaschine angekuppelt und andererseits über ein besonderes Fahrwerk bzw. einen Zwischenrahmen unmittelbar an den Dreipunktkraftheber eines Schleppers angekuppelt werden kann. Bei dieser Sämaschine ist jedoch von Nachteil, daß bei dem Soloeinsatz der Sämaschine kein Andrücken des Saatbettes möglich ist, und daß weiterhin es nicht ohne weiteres möglich ist, die bekannte Sämaschine in Kombination mit einem einfachen Bodenbearbeitungsgerät einzusetzen.

In einer erfindungsgemäßen Ausführungsform ist vorgesehen, daß an den Zwischenrahmen in dem Bereich der Schlepperräder Spurlockerungszinken oder Spurzustreicherelemente angeordnet sind. Aufgrund dieser Maßnahmen lassen sich in einfachster Weise die von den Schlepperrädern herrührenden verfestigten Bodenstreifen entweder lockern oder mittels der Spurzustreicherelemente mit Boden wieder auffüllen, so daß das Saatgut anschließend von den Säscharen der Sämaschine in einer ebenen Bodenoberfläche abgelegt werden kann.

Weiterhin ist erfindungsgemäß vorgesehen, daß der Zwischenrahmen zumindest einen quer zur Fahrtrichtung verlaufenden Querbalken aufweist, daß der Querbalken sich über die gesamte Arbeitsbreite der Bodenwalze erstreckt, und daß an diesem Querbalken über die gesamte Arbeitsbreite der Sämaschine verteilt mehrere Bodenlockerungszinken angeordnet sind. Infolge dieser Maßnahme ist es in einfachster Weise möglich, den Zwischenrahmen zusätzlich mit Bodenlockerungszinken auszustatten, so daß auf leichten Böden mittels der Bodenlockerungszinken das Saatbett bereitet und anschließend dieses durch die Bodenlockerungszinken gelockerte und gekrümelte Saatbett mittels der Bodenwalze der Sämaschine angedrückt und anschließend mittels der Sämaschare das Saatgut in diesem Saatbett abgelegt werden kann. Für mittlere und mittelschwere Böden können auch die Lockerungszinken in zwei Querreihen angeordnet sein.

Um die Sämaschine über den Zwischenrahmen unmittelbar an den Dreipunktkraftheber eines Schleppers ankuppeln zu können, ist erfindungsgemäß vorgesehen, daß der Zwischenrahmen auf seiner Vorderseite Dreipunktkupplungselemente besitzt.

Eine besonders vorteilhafte Bauweise der Bodenwalze ergibt sich dadurch, daß die Bodenwalze aus nebeneinander angeordneten Gummireifen besteht. Aufgrund dieser Ausbildung der Bodenwalze ist es nicht erforderlich, daß an der Bodenwalze Abstreifer angeordnet werden müssen, um ein Verstopfen der Bodenwalze bzw. ein Verschmieren der Bodenwalze zu verhindern, sondern vielmehr wird durch die entsprechende Ausbildung der Bodenwalze als Gummireifenwalze ein Selbstreinigungseffekt erzielt.

Weitere erfindungswesentliche Merkmale sind den übrigen Unteransprüchen, der Beispielsbeschreibung und den Zeichnungen zu entnehmen. Hierbei zeigen

Fig. 1 eine erfindungsgemäß ausgebildete Sämaschine in Kombination mit einem zapfwellengetriebenen Bodenbearbeitungsgerät in der Seitenansicht,

Fig. 2 die erfindungsgemäße Sämaschine mit dem erfindungsgemäßen Zwischenrahmen in Seitenansicht,

Fig. 3 die erfindungsgemäße Sämaschine mit dem Zwischenrahmen, an dem in einer Querreihe die Bodenlockerungszinken angeordnet sind, in der Seitenansicht,

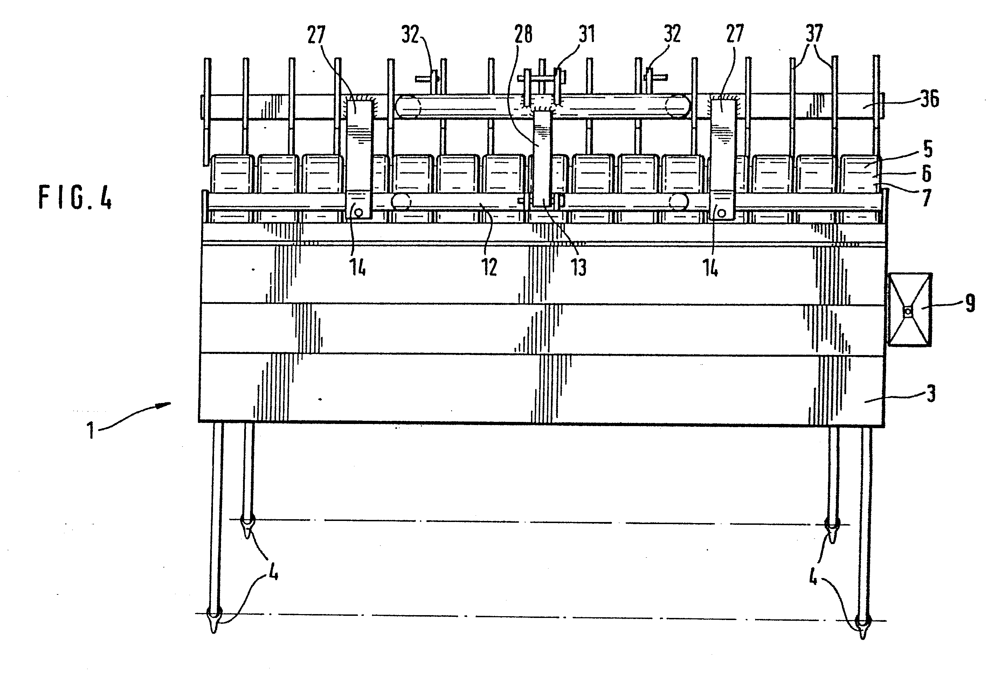

Fig. 4 die Sämaschine mit dem Zwischenrahmen gemäß Fig. 3 in der Draufsicht und

Fig. 5 die erfindungsgemäße Sämaschine mit einem weiteren erfindungsgemäßen Zwischenrahmen, an dem die Bodenlockerungszinken in zwei Querreihen angeordnet sind, in der Seitenansicht.

Die Sämaschine 1 weist den Rahmen 2, den Vorratsbehälter 3, die Säschare 4 sowie das Fahrwerk 5 auf. Das Fahrwerk 5 ist unter dem Vorratsbehälter 3 und vor den als Säscharen ausgebildeten Säelementen angeordnet und als

5

durchgehende Bodenwalze 6 ausgebildet. Diese Bodenwalze 0256225 besteht aus nebeneinander angeordneten Gummireifen 7. Von der Bodenwalze 6 aus werden über den Kettentrieb 8 und dem Regelgetriebe 9 die Dosierelemente 10 angetrieben. Über die Dosierelemente 10 wird das sich im Vorratsbehälter 3 befindliche Saatgut in einstellbaren Mengen über die Saatleitungsrohre 11 den Säscharen 4 zugeleitet, die das Saatgut im Boden ablegen. Hinter der Sämaschine kann in bekannter und daher nicht dargestellter Weise ein Saatstriegel angeordnet sein.

Auf der Vorderseite des Rahmens 2 ist der Ankupplungsrahmen 12 angeordnet, an dem das obere Kupplungselement 13 und die beiden unteren Kupplungselemente 14 in einem Abstand zueinander angeordnet sind. Mittels des oberen Kupplungselementes 13 und der beiden unteren Kupplungselemente 14 ist die Sämaschine 1 über die obere Kupplungsstange 15 und die beiden unteren Kupplungsstangen 16, die zusammen die Kupplungselemente 17 bilden, hinter dem zapfwellengetriebenen Bodenbearbeitungsgerät 18 anzukuppeln. Das zapfwellengetriebene Bodenbearbeitungsgerät 18 ist als Kreiselgrubber bzw. Kreiselegge ausgebildet. Das zapfwellengetriebene Bodenbearbeitungsgerät 18 ist über die Dreipunktkupplungselemente 19 in bekannter und daher nicht dargestellter Weise an den Dreipunktkraftheber eines ebenfalls nicht dargestellten Ackerschleppers anzukuppeln. Die Bodenbearbeitungszinken 20 des Bodenbearbeitungsgerätes 18 werden in bekannter und daher ebenfalls nicht dargestellter Weise über eine Gelenkwelle von der Zapfwelle des nicht dargestellten Ackerschleppers angetrieben. Die obere Kupplungsstange 15 besteht aus den beiden Stangen 21 und 22, welche über das Gelenk 23 miteinander verbunden sind. An dem Gelenk 23 ist noch der Hebel 24 angeordnet. Zwischen dem Hebel 24 und dem oberen Teil des Dreipunktkupplungselementes 19 des Bodenbearbeitungsgerätes 18 ist der Hydraulikzylinder 25 angeordnet. Mittels des Hydraulikzylinders 25, der an die Schlepperhydraulik des das Bodenbearbeitungsgerät 18 ziehenden Schleppers angeschlossen ist, können die Stangen 21 und 22 der oberen Kupplungsstange 15 zusammen- bzw. eingeknickt werden, so daß die Sämaschine 1 um die durch die untere Kupplung 14 verlaufende Schwenkachse nach vorn verschwenkt wird, so daß der Schwerpunkt der Sämaschine 1 und somit der Gesamtschwerpunkt der aus der Sämaschine 1 und dem Bodenbearbeitungsgerät 18 bestehenden Gerätekombination in Richtung des Schleppers verlagert wird.

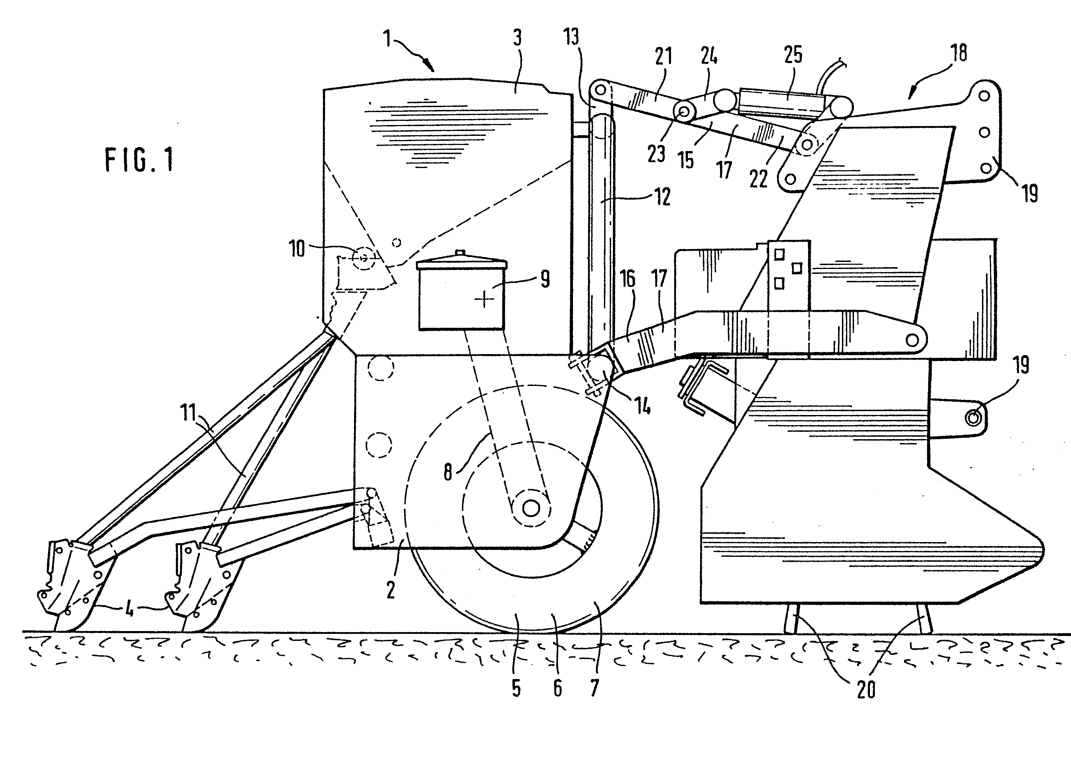

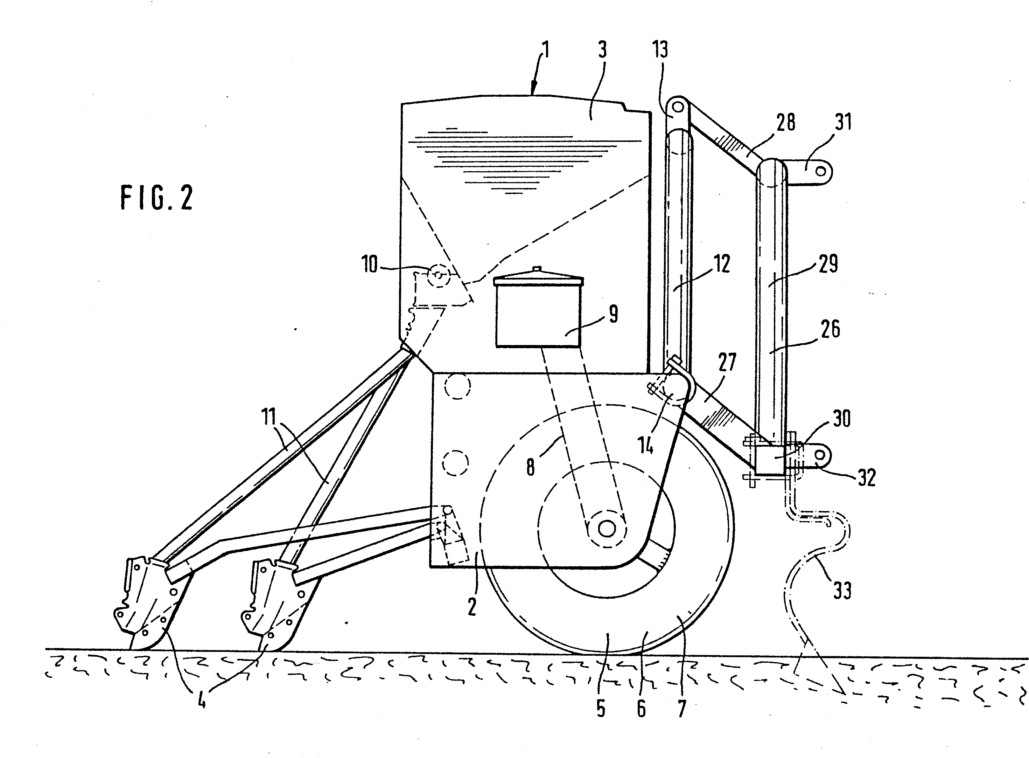

Wenn die Sämaschine 1 nicht in Kombination mit einem zapfwellenangetriebenen Bodenbearbeitungsgerät, wie es in Fig. 1 beispielsweise dargestellt ist, eingesetzt werden soll läßt die Sämaschine 1 sich entsprechend Fig. 2 mittels des Zwischenrahmens 26 unmittelbar an den Dreipunktkraftheber des nicht dargestellten Schleppers ankuppeln. Der Zwischenrahmen 26 weist auf seiner Rückseite die beiden unteren Kupplungselemente 27 und die obere Kupplungsstange 28 auf, mittels der der Zwischenrahmen 26 an die obere Kupplung 13 und die untere Kupplung 14 des Ankuppelrahmens 12 der Sämaschine 1 in einfacher Weise anzukuppeln ist. Der Zwischenrahmen 26 weist das V-förmig gebogene Rohr 29 sowie auf seiner Unterseite das Querrohr 30 auf. Des weiteren weist der Zwischenrahmen 26 auf seiner Vorderseite das obere Dreipunktkupplungselement 31 und die beiden unteren Dreipunktkupplungselemente 32 auf, über welche die Sämaschine unmittelbar an den Dreipunktkraftheber eines Schleppers anzuordnen ist. Des weiteren können an dem Querrohr 30 des Zwischenrahmen 26 die mit strichpunktierten Linien angedeuteten Spurzustreicher bzw. Spurlockerungselemente 33 innerhalb bzw. dicht neben der Schlepperspur des die Sämaschine 1 ziehenden Schleppers angeordnet werden.

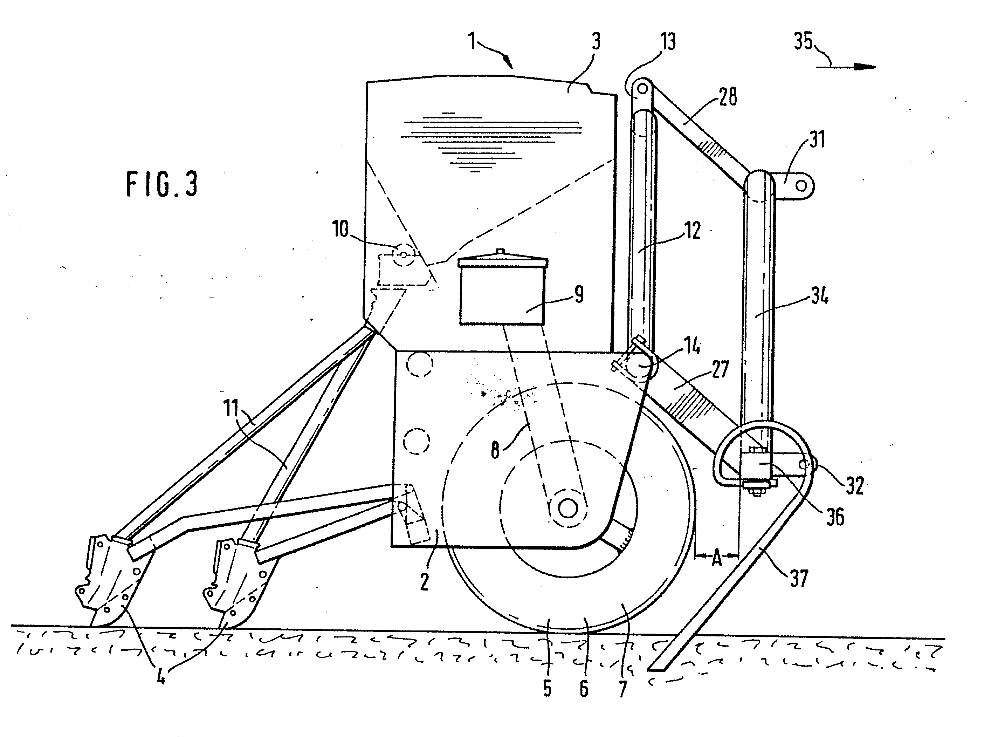

Der Zwischenrahmen 34 entsprechend Fig. 3, der an den oberen Kupplungselementen 13 und den unteren Kupplungselemente 14 des Ankupplungsrahmens 12 der Sämaschine 1 über die beiden unteren Kupplungselemente 27 und das obere Kupplungselement 28 angekuppelt ist, weist wiederum auf seiner Vorderseite das obere Dreipunktkupplungselement 31 und auf seiner Unterseite die beiden unteren Dreipunktkupplungselemente 32 auf. Des weiteren weist der Zwischenrahmen 34 auf seiner Unterseite den quer zur Fahrtrichtung 35 verlaufenden Querbalken 36 auf. Der Querbalken 36 erstreckt sich über die gesamte Arbeitsbreite der Bodenwalze 6 bzw. der Sämaschine 1. An dem Querbalken 36 sind über die gesamte Arbeitsbreite der Sämaschine 1 verteilt die Bodenlockerungszinken 37 angeordnet. Der Querbalken 36 befindet sich dicht vor der Bodenwalze 6 und zwar in einem kleinen Abstand A. Der Abstand A zwischen dem Querbalken 36 und der Umlauffläche der Bodenwalze 6 ist kleiner als 10 cm. Des weiteren befinden sich die Kupplungselemente 13, 14, 27 und 28 zwischen dem Zwischenrahmen 34 und der Sämaschine 1 sich im wesentlichen im Bereich oberhalb der Bodenwalze 6.

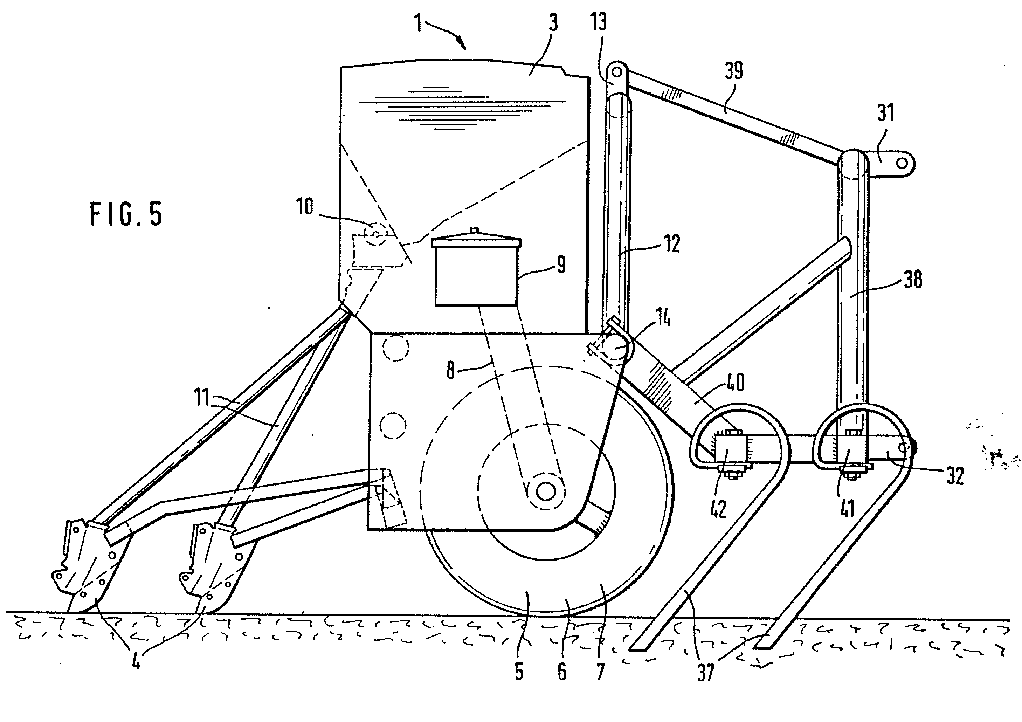

Der Zwischenrahmen 38 gemäß Fig. 5, der über die obere Kupplungsstange 39 und die beiden unteren Kupplungsstangen 40 an dem Ankupplungsrahmen 12 der Sämaschine 1 angekuppelt ist, weist auf seiner Vorderseite das obere Dreipunktkupplungselement 31 und die beiden unteren Dreipunktkupplungselemente 32 zum Anschluß des Zwischenrahmens 38 an den Dreipunktkraftheber eines nicht dargestellten Schleppers auf. Des weiteren weist der Zwischenrahmen 38 auf seiner Unterseite die beiden in einem Abstand hintereinander angeordneten Querbalken 41 und 42 auf. Sowohl an dem vorderen Querbalken 41 als auch an dem hinteren Querbalken 42 sind jeweils in einer Reihe die Bodenlockerungszinken 37 angeordnet. Somit sind diese Bodenlockerungszinken 37 in zwei hintereinander liegenden Querreihen angeordnet.

Im vorhergehenden wurde aufgezeigt, wie die Sämaschine 1 wahlweise hinter einem zapfwellenangetriebenen Bodenbearbeitungsgerät 18 oder mittels der Zwischenrahmen 26, 34 und 38 unmittelbar an den Dreipunktkraftheber eines Schleppers anzuordnen ist.

1

Amazonen-Werke

H. Dreyer GmbH & Co. KG

Am Amazonenwerk 9 - 13

4507 Hasbergen-Gaste

ANR 1 000 667

## Patentansprüche

1.
Sämaschine mit einem Rahmen, Vorratsbehälter, Säscharen und einem Fahrwerk, welches als unter dem Vorratsbehälter und vor den Säscharen angeordnete durchgehende Bodenwalze ausgebildet ist, dadurch gekennzeichnet, daß die Sämaschine (1) wahlweise hinter einem zapfwellenangetriebenen Bodenbearbeitungsgerät (18) oder mittels eines Zwischenrahmens (26,34,38) unmittelbar an dem Dreipunktkraftheber eines Schleppers anzuordnen ist.

2.
Sämaschine nach Anspruch 1, dadurch gekennzeichnet, daß an den Zwischenrahmen (26) in dem Bereich der Schlepperräder Spurlockerungszinken (33) oder Spurzustreicherelemente (33) angeordnet sind.

3.
Sämaschine nach Anspruch 1, dadurch gekennzeichnet, daß der Zwischenrahmen (34,38) zumindest einen quer zur Fahrtrichtung (35) verlaufenden Querbalken (36,41,42) aufweist, daß der Querbalken (36,41,42) ) sich über die gesamte Arbeitsbreite der Bodenwalze (6) erstreckt, und daß an diesem Querbalken (36,41,42) über die gesamte Arbeitsbreite der Sämaschine (1) verteilt mehrere Bodenlockerungszinken (37) angeordnet sind.

4.

Sämaschine nach Anspruch 3, dadurch gekennzeichnet, daß diese Lockerungszinken (37) in zwei Querreihen angeordnet sind.

5.

Sämaschine nach Anspruch 1, dadurch gekennzeichnet, daß der Zwischenrahmen (26,34,38) auf seiner Vorderseite Dreipunktkupplungselemente (31,32) besitzt.

6.

Sämaschine nach Anspruch 1, dadurch gekennzeichnet, daß die Bodenwalze (6) aus nebeneinander angeordneten Gummireifen (7) besteht.

7.

Sämaschine nach Anspruch 1, dadurch gekennzeichnet, daß der Zwischenrahmen (34,38) als Bodenbearbeitungsgerät ausgebildet ist.

8.

Sämaschine nach Anspruch 1, dadurch gekennzeichnet, daß die Kupplungselemente (13,14,27,28,39,40) zwischen dem Zwischenrahmen (26,34,38) und der Sämaschine (1) sich im wesentlichen im Bereich oberhalb der Bodenwalze (6) befinden.

9.

Sämaschine nach Anspruch 1 oder 3, dadurch gekennzeichnet, daß der Querbalken (36,42) dicht vor der Bodenwalze angeordnet ist.

10.

Sämaschine nach Anspruch 9, dadurch gekennzeichnet, daß der Abstand (A) zwischen dem Querbalken (36,42) und der Umlauffläche der Bodenwalze (6) kleiner als 10 cm ist.

FIG. 1

1 / 5

0256225

FIG. 2

FIG.3

FIG.4

0256225

FIG.5

5/5

0256225